# EUROPEAN PATENT SPECIFICATION

(11) **EP 4 027 221 B1**
(45) Date of publication and mention of the grant of the patent: **06.09.2023**
(21) Application number: 21151021.9
(22) Date of filing: 11.01.2021
(51) Int. Cl.: G06T 19/00

(54) **MEDIA PROCESSING METHOD, DEVICE AND SYSTEM**
MEDIENVERARBEITUNGSVERFAHREN, -VORRICHTUNG UND -SYSTEM
PROCÉDÉ, DISPOSITIF ET SYSTÈME DE TRAITEMENT DE MÉDIA

(43) Date of publication of application: 13.07.2022
(73) Proprietor: Eyeora Limited, London SE10 0PB (GB)
(72) Inventor: CORAZZI, Daniel, London, WC2A 2JR (GB)
(74) Representative: Carpmaels & Ransford LLP

(56) References cited:
- WO-A1-2018/071562
- US-A1- 2019 156 690

## Description

### Field of Invention

The present invention relates to a computer implemented method, device and system for processing 3D media data, in particular a computer implemented method, device and system for locating a virtual 3D location within a master 3D digital asset, such as for locating an auxiliary digital asset within the 3D master 3D digital asset.

### Background

Three-dimensional (3D) digital content, such as 360/180 degree, immersive digital content or virtual reality (VR) videos are becoming ever more commonplace. In recent years, online services such as YouTube^{™} have enabled 360 digital content to be uploaded, accessed and streamed by anyone with an internet connection and an internet connected user device. The user devices which can access and play 3D digital content can vary from conventional computers, smartphones, and tablet devices to virtual reality (VR) headsets, with each type of device giving the user some form of VR experience of the 3D video.

A hurdle to the availability of 3D digital content is the complexity involved in generating it. In particular, hotspot type content can be particularly problematic in terms of its generation because it contains multiple sources of digital media located within different virtual positions of the 3D environment; these sources have been obtained from different physical locations in a real world scene. The individual sources of the digital media content are often recorded independently and then have to be stitched together in a laborious editing process which involves significant user input and manipulation to ensure that the different sources of digital content are synchronised.

For example, a master 3D digital asset may contain various hotspot locations, i.e. positional locations within the master asset from which auxiliary digital assets, such as 2D or further 360/180 degree or 3D content can be accessed and viewed by a user. These auxiliary digital assets are obtained from different auxiliary content generation devices located at different positional locations and having different recording start times within the overall real world scene. When the digital assets are being edited prior to distribution, a content editor will manipulate the various digital assets and locate them virtually to different positional locations within the master 3D digital asset; the different positional locations corresponding to the real world location of the content generation device from which the auxiliary digital content was recorded. The content editor interfaces provided to generate and manipulate the various digital assets and in particular to locate them within the virtual scene of the master 3D digital asset are not well configured to enable accurate placement efficiently and easily within the virtual scene. Moreover, the underlying master 3D digital asset has to be rendered within its corresponding 3D player during the content editing process, such that there is an additional technical constraint on how a content editor is implemented.

It is aim of the present invention to solve the aforementioned problems and other problems associated with the processing of 3D digital media.
WO 2018/071562 A1 describes a method of managing virtual/ augmented reality content which involves uploading media content and operating a transcoder to generate a low-level version of the media content and slices from the low-level version and original version of the media content; displaying a project map comprising media samples of the uploaded media; linking a pair of uploaded media by connecting a start node on one media sample to an other media sample, thus creating an exit node; configuring a content player to select the slices of the low-level version; and configuring the content player to generate a 360° media content stream by geometrically positioning the slices orthogonal to a virtual rotatable viewport and assigning a coordinate system for vectors of the virtual rotatable viewport.
US 2019/156690 A1 describes a computer-implemented method for providing a graphical user interface for use in a virtual reality system. A virtual reality simulation of a user's view of a simulated virtual reality environment is generated and output for display on a virtual reality display, the virtual reality environment comprising the graphical user interface. The graphical user interface comprises one or more selectable cells positioned within the simulated virtual reality environment at one or more corresponding fixed positions within the virtual reality environment relative to a position of the user within the virtual reality environment, the one or more fixed positions being independent of the direction of view of the user. In response to receiving an indication of a selection of one of the one or more selectable cells, one or more further cells are positioned within the simulated virtual reality environment adjacent to the selected cell such that the graphical user interface is built around the user within the virtual reality environment.

### Summary

In a first aspect of the invention, there is provided a computer implemented method for processing digital data including a master 3D digital asset and an auxiliary digital asset, the method comprising:
providing a 3D digital asset player within a display screen operatively connected to a processing device;
providing a first positional mesh on at least a portion of the 3D digital asset player, wherein the first positional mesh assigns a plurality of display screen positions within the display screen with corresponding virtual 3D positional location within the master 3D digital asset;
identifying a display screen position via a user input device operatively connected to the computing device; and
determining via the first positional mesh a virtual 3D positional location within the master 3D digital asset from the identified display screen position.

By providing a positional mesh on a 3D digital asset player, improved location determination of user input within the virtual scene currently being displayed by the 3D asset player takes place. In particular, the invention is particularly advantageous for identifying user input for associating auxiliary digital assets at positional locations within the master 3D digital scene, for example in a hotspot generation process.

For the purposes of the present disclosure, the master 3D digital asset may comprise 360, VR or 3D video data recorded from a real world scene. The auxiliary digital assets may comprise 2D, 360, VR or 3D video data of the real world scene, or audio data of the real world scene. The master 3D digital asset may be generated via a master content generation device typically comprising 360/3D/VR video capture devices (including associated audio capture capability). The auxiliary digital assets may be generated from one or more auxiliary content generation devices. The auxiliary content generation devices for the auxiliary digital assets typically comprise 2D or 360/3D/VR video capture devices (including associated audio capture capability) or merely an audio capture device.

The step of identifying a display screen position may comprise enabling a marker for the auxiliary digital asset to be dragged and dropped via the user input device from a first area of a display screen to a second area on the display screen (comprising the 3D digital asset player and a displayed current view of the master 3D digital asset) onto which the first positional mesh is provided. The drop point of the marker is at an X-Y position on the display screen. Alternatively, the step of identifying a display screen position may comprise enabling a marker for the auxiliary digital asset to be placed by clicking with a pointing device or touching with the display being touch-sensitive display at a X-Y position on the display screen at the second area overlaying the 3D digital asset player and current view of the master 3D digital asset. With the mesh provided over the 3D player, this process enables an effective way of interacting with an existing 3D player for determination for hotspot placement at virtual 3D positional locations in the current view being displayed in a content editor mode via an existing 3D player.

The step of determining may comprise:
determining the virtual 3D positional location in the master 3D digital asset based on a mesh location identified from the display screen position of the user input device,
wherein the first positional mesh provides a mapping of a plurality of mesh locations within the display screen to corresponding virtual 3D positional locations of a current view of the master 3D digital asset being displayed in the 3D digital asset player. The mapping may comprise a lookup table for each given mesh corresponding to a virtual depth position for the given viewpoint position in the master 3D digital asset, with positional display information for the current user input position being mapped via the lookup table to a corresponding virtual 3D position.

The first positional mesh may assign a plurality of display screen positions within the display screen with corresponding virtual 3D positional location a first depth position within the master 3D digital asset.

The computer-implemented method may further comprise:
providing a second positional mesh on at least a portion of the 3D digital asset player, wherein the second positional mesh assigns a plurality of display screen positions within the display screen with corresponding virtual 3D positional location a second depth position within the master 3D digital asset which is different to the first depth position. Each depth position Z may relate to a different set of X-Y positional positions on the display and correspondingly different virtual 3D positional locations in the master 3D digital asset.

The computer-implemented method may further comprise:
associating in a database the determined virtual 3D positional location for a hotspot with the auxiliary digital asset.

The computer-implemented method may further comprise:
delivering, to a user device, the master 3D digital asset and the auxiliary digital asset,
playing the master 3D digital asset by a 3D digital asset player; and
displaying a hotspot marker for the auxiliary digital asset within the master 3D digital asset at the determined virtual 3D positional location identified from the database.

The computer-implemented method may further comprise switching from playing the master 3D digital asset to playing of the auxiliary digital asset upon activation of the hotspot marker.

The computer-implemented method may further comprise:
detecting activation of the hotspot marker at the virtual 3D positional location;
playing the auxiliary digital asset in the 3D digital asset player in response to the detected activation of the hotspot marker. Activation may comprise clicking on the hotspot marker with a pointing device or touching on the hotspot marker via the display being a touch-sensitive display.

The master 3D digital asset may comprise a 3D digital scene, for example a 3D video stream or 360 degree video content.

The auxiliary digital asset comprise an auxiliary 3D digital scene, for example an auxiliary 3D video stream.

In a second aspect of the present invention, there is provided a processing device configured to perform the aforementioned method.

The processing device may be a distributed processing system including a user device for performing some of the functionality of the processing device in a distributed fashion along with an associated media processing device (to which the user device is connected). The media processing device may operate in content processing or content generation mode based on content stored in a media server. The user device may be one or more of a personal computer, e.g. desktop or laptop computer, a tablet device, a mobile device, e.g. a smartphone, and a virtual reality (VR) device, such as a VR headset. The user device may comprise a display, e.g. a display screen, such as a touch sensitive display screen, configured for display of the master 3D digital asset and auxiliary digital asset. The user device, media server and media processing device are each configured to be in communication with each other for transmitting requests for and transmitting and receiving the master 3D digital asset and auxiliary digital asset. Communication between the media processing device, user device and media server may take place via one or more communication links, such as the internet, and the communication links may be wired or wireless, or a combination of the two based on any known network communication protocol.

### Brief Description of the Drawings

The present invention has been described below purely by way of example with reference to the accompanying drawings in which:
Fig. 1 is a component diagram of an overall system in which the invention is implemented.
Fig. 2 is a component diagram of a media processing device of the system of Fig. 1.
Fig. 3 is a component diagram of a 3D content generation system.
Fig. 4 is a rendered view of a 3D digital asset as viewed from a 2D viewer/player.
Fig. 5 is an interactive display of a content editor generated according to the media processing device of Fig. 2.
Fig. 6 is a flow diagram of the method performed by the system of Fig. 1.

### Detailed Description

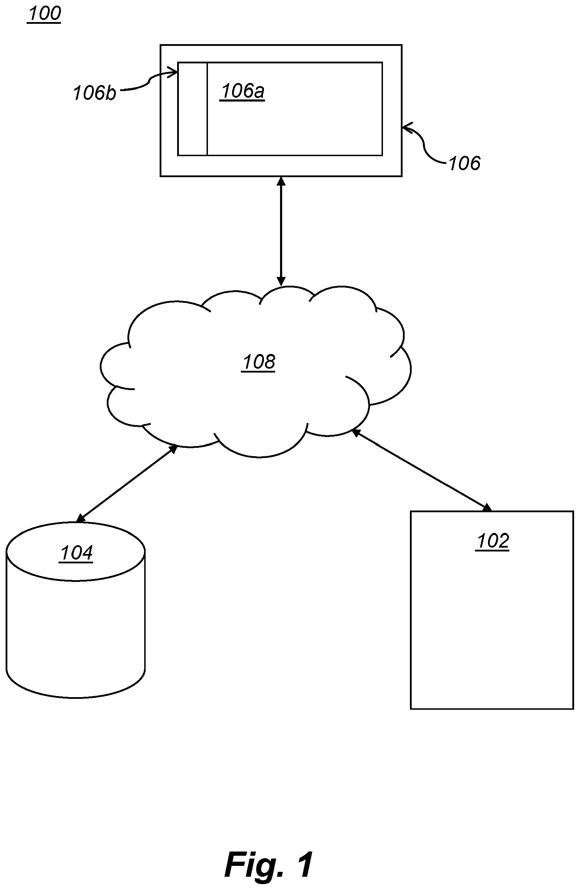

Referring to Fig. 1, there is provided a system 100 for processing and distributing digital media. The system 100 comprises a media processing device 102, a media server 104 and a user device 106. Each of the media processing device 102, the media server 104 and the user device 106 are in communication with each other via the internet 108. The media processing device 102 is configured to process digital assets stored at the media server 104 in accordance with the processes described herein.

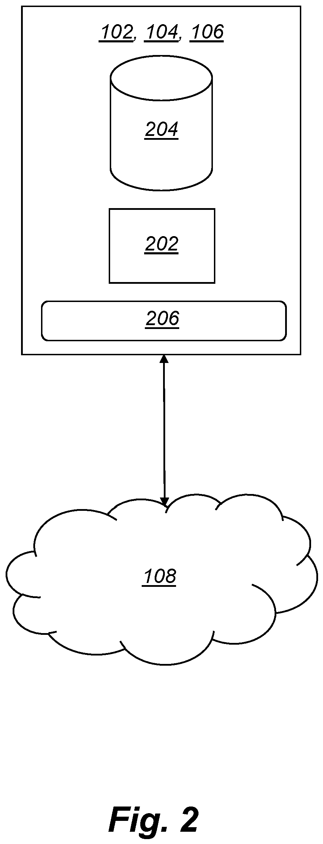

Referring to Fig. 2, additional components of the media processing device 102 are depicted, including a processor 202, memory 204 and communication interface 206. The processor 202 is configured to obtain computer executable code from the memory 204 and executed the computer executable code to perform the processes described herein. The media server 104 and user device 106 may each also be configured with the same type of components in the same fashion as depicted in Fig. 2. The user device 106 may additionally be configured with a display 106a, which may be a display screen, e.g. touch sensitive screen, for displaying digital assets obtained and delivered from the media server 104. A user input device 106b may also be provided which is configured to receive user input into processor 202 and request and obtain digital assets based on such user input. The user input device 106b may be integrated with display 106a, for example as touch sensitive input device integrated into a touch sensitive display. Alternatively the user input device 106b may be completely separate to the display 106a, and be for example a keypad or remote control input device in communication with the processor 202 of the user device 106.

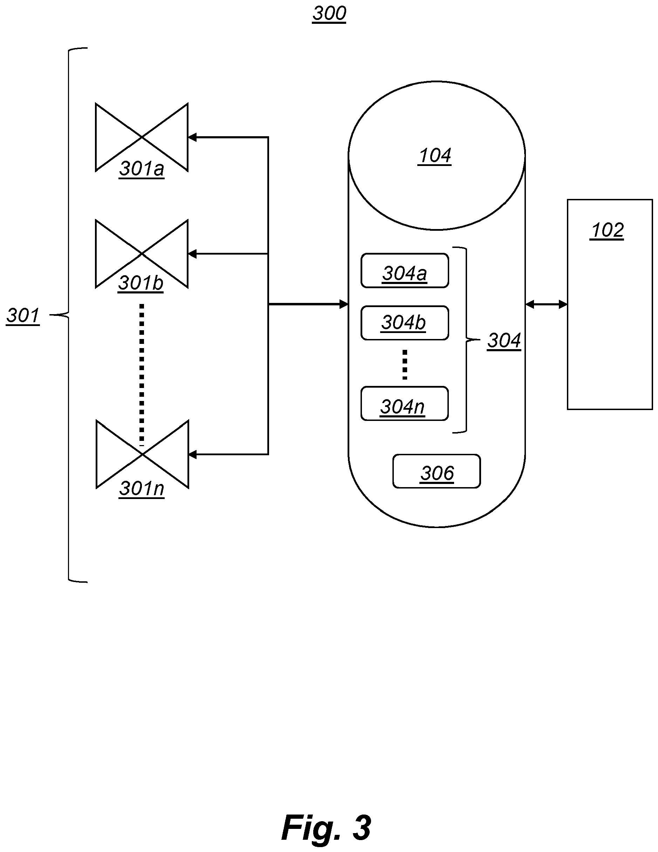

Referring to Fig. 3, a 3D content generation system 300 is depicted comprising a plurality of digital content generation devices 301, with each content generation device 301a ... 301n being configured to acquire and generate digital media assets corresponding to a real world scene, such as, for example, one of: a concert, a theatrical production, an in-person meeting etc. Each content generation device 301a ... 301n is configured to acquire and generate digital assets based on video and/or audio generated from the real world scene. At least one of the content generation devices 301 is a master content generation device 301a, such as 3D video capture device configured to obtain and generate 3D video and audio data for a master 3D digital asset 304a. Such a 3D video capture device typically comprises a plurality of individual video acquisition devices directed at different positions in the real world scene along with associated audio capture, with the resulting video from each acquisition device being stitched together digitally by the 3D video capture device or associated processing device to generate the master 3D digital asset 304a comprising 360 video and audio data of the scene. The 3D video capture device is configured to obtain its 3D video and audio data from a fixed or moving physical location within the real world scene.

Each of the remaining plurality of content generation devices 301b...301n may be an auxiliary content generation device each configured to generate auxiliary digital media assets of video and audio, and may each comprise one or more of: a further 3D video capture device, a 2D video capture device, an audio capture device. The 3D/2D video capture devices are configured additionally to generate audio data alongside the video data. The audio capture device is configured to generate just audio data. Each auxiliary content generation device is configured to generate its auxiliary digital asset from a fixed or moving auxiliary physical location within the real world scene.

The digital media assets thus generated by the content generation devices 301 comprise at least one master 3D digital asset 304a comprising 360 video and audio data of the real world scene, and one or more auxiliary digital assets 304b...304n comprising 3D, 2D and/or audio data of the real world scene. The master 3D digital asset 304a and one or more auxiliary digital assets 304b...304n thus acquired are transmitted to the media server 104 and stored therein as digital asset files. Storage in the media server 104 of each digital asset can take place in real time, e.g. during capture, or can take place after acquisition, possibly even after a significant delay. For example, a user of an auxiliary content generation device may upload the auxiliary digital asset of the scene during capture, or after some time, for example many days after acquisition. Each digital asset 304 stored in the media server 104 comprises or has associated metadata identifying the real world scene or event captured, along with the time and, optionally physical location data of the content generation device 301 within the real world scene during capture of the asset. The physical location data may be assigned automatically, for example based on an automatic location determination device within the content generation device, or may be assigned later by the user upon upload to the media server 104.

The times of capture of the master 3D digital asset 304a and auxiliary digital assets 304b...304n of the scene may overlap at least in part, but typically the auxiliary digital assets 304b...304n would be timed such that they have been acquired wholly within the capture period of the master 3D digital asset 304a. The start time of each auxiliary digital asset may vary, and since the auxiliary content generation devices 301b...301n are independent of each other (possibly acquired completely independently via different users of each auxiliary generation device), there is typically no synchronous time stamp available across each digital asset in relation to when it was acquired with respect to one or more of the other digital assets. In particular, there is no information available concerning the start time of each auxiliary digital asset with respect to a playback time of the master 3D digital asset 304a. In prior art systems, the time synchronisation data between digital assets is assigned by a 360 content editor who manually reviews each digital asset within a content editor and places each asset on a common timeline for all acquired digital assets for the real world scene.

The media server 104 stores each digital asset 304a... 304n upon receipt and in one embodiment associates the individual assets within the media database 306 to a corresponding virtual scene for which there is at least one corresponding master 3D digital asset 304a. As explained above, metadata is generated including data corresponding to the scene. This data is stored in media server 104 such that a scene identifier for each auxiliary digital asset 304b... 304n links it to a corresponding master 3D digital asset 304a. This scene data can be stored separately as depicted in media database 306,

In an alternative embodiment the scene data is stored within an asset bundle 304, such that an asset bundle 304 is generated for each master 3D digital asset 304a comprising the master 3D digital asset 304a itself along with its associated auxiliary assets 304b...304n and scene data, including the data linking the auxiliary assets to their corresponding master 3D digital asset, virtual 3D positional information of the auxiliary assets within the master 3D digital asset and time synchronisation data for each auxiliary digital asset within the master 3D digital asset.

Media processing device 102 access the media server 104 and acquires each auxiliary digital asset 304b...304n for a given scene identifier and processes each auxiliary digital asset 304b...304n to determine its temporal location within its corresponding master 3D digital asset 304a and store corresponding time synchronisation data for each auxiliary digital asset 304b...304n with the media database 306.

The media processing device 102 can be configured to process each auxiliary digital asset 304b...304n for temporal information in real time as it is uploaded to media server 104. Alternatively, the media processing device 102 can be configured to process each auxiliary digital asset 304b... 304n only upon instigation by a content editor. Either way, a master 3D digital asset 304a must first have been identified and associated based on its corresponding scene identifier to one or more corresponding auxiliary digital assets 304b...304n.

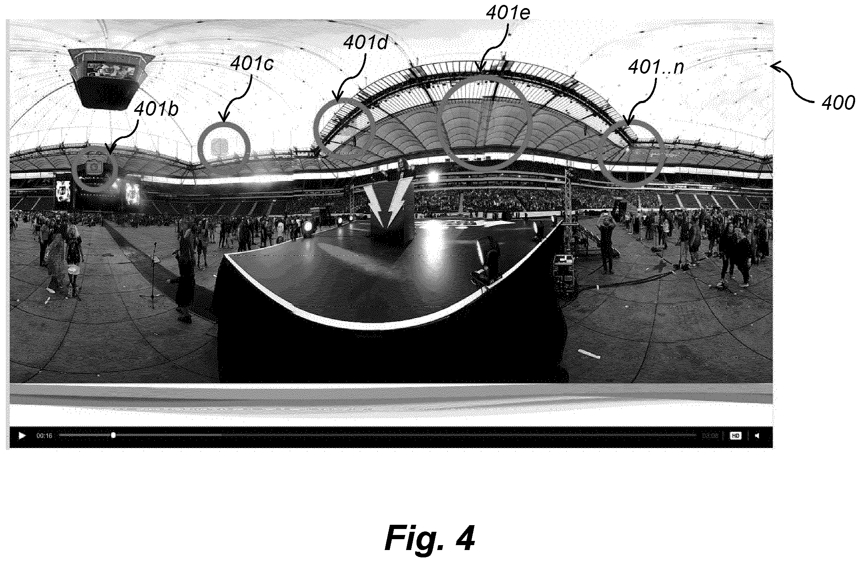

Referring to Fig. 4, a snapshot rendered view of the master 3D digital asset is depicted showing a 2D representation 400 of a 360 virtual scene corresponding to the real world scene captured by the master content generation device 301a and being played back on the user device 106 via the display 106 via 3D asset player 401. With user input obtained via user input device 106b, the field of view of the 360 virtual scene will change, for example if the user device 106 is a VR headset, then movement of the user's head will cause the field of view during playback of the master 3D digital asset to change corresponding to the detected head movement from the VR headset. Other forms of directional user input may also adapt the field of view displayed, for example user input received by a keypad or touch control on the display 106a.

The rendered view may be depicted on the display 106a of the user device 106 which has acquired the master 3D digital asset 304a from media server 104. The master 3D digital asset 304a comprises video and audio data of the real world scene. In addition, the master 3D digital asset 304a includes auxiliary asset location identifiers 403 (403b ...403n) ("hotspots") of the locations within the 360 virtual scene of one or more auxiliary digital assets 304b...304n each acquired from one or more of the auxiliary content generation devices 301b... 301n when they were positioned within the real world scene during acquisition of the master 3D digital asset 304a. As explained above, each auxiliary digital asset has associated metadata including location data indicative of the physical location within the real world scene, and thus correspondingly location data of its virtual location within the master 3D digital asset 304a, such that the master 3D digital asset 304a includes such location data for displaying the corresponding location identifier 403 for each digital asset at its virtual location during playback. Each auxiliary asset location identifier 401 can be activated during playback upon user input via input device 106b to cause the user device 106 to start playback of the auxiliary digital asset corresponding to the location identifier selected. Each location identifier 403 may be displayed (or made available for selection) within the master 3D digital asset scene only for the time period during which it exists within the master 3D digital asset scene. Thus, if an auxiliary digital asset is only available for a portion of the time (such that it starts part way through the master 3D digital asset 304a and/or finishes before the end of the master 3D digital asset 304a), its corresponding location identifier 403 will only be displayed or made available for that corresponding period of time.

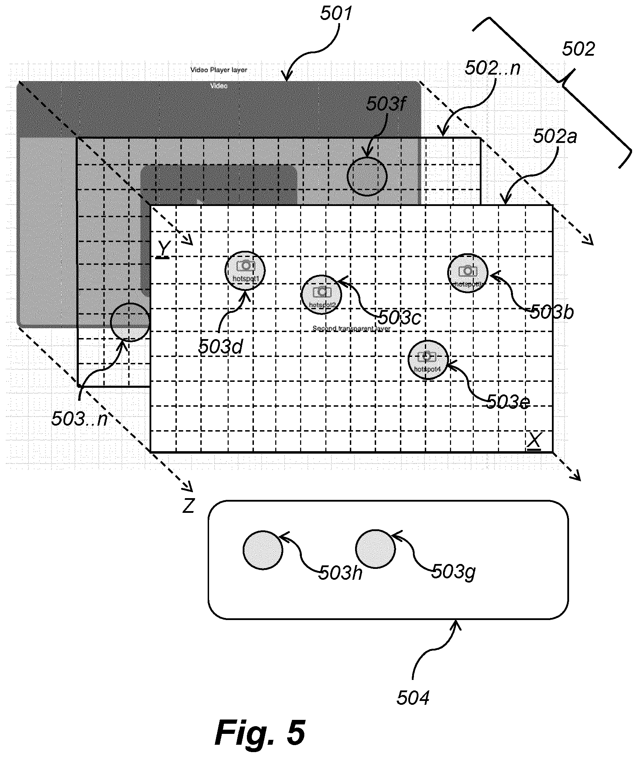

Referring to Fig. 5, a representative layout of a display 106a on user device 106 acting as a content editor device is displayed. A 3D digital asset player 501 operates and is displayed in the display 106a. The 3D digital asset player 501 may be transmitted to the user device 106 for execution thereon by the media processing device 102 acting in content editing mode (or another separate content editor device). Editor layer 502 is generated by media processing device 102 in content editing mode (or another content editor device) and transmitted to the user device 106, and is overlaid on the 3D digital asset player 501 with the display 106a. The 3D digital asset player 501 and editor layer 502 are generated by the media processing device 102 in content editing mode and displayed by the user device 106 independently from each other, and each operates independently in relation to detection of user input via input device 106b and processing of the user input. However, the positional placement of the 3D digital asset player 501 and editor layer 502, with the latter overlaid on the first in the display 106a, is such that X-Y positional locations of input provided by input device 106b within the editor layer 502 can be detected. Since there is a fixed positional relationship in the X-Y plane of the display 106a between the 3D digital asset player 501 and editor layer 502, a mapping of user input in the editor layer 502 can be made with a positional location in the 3D digital asset player 501, and thereby a mapping of user input to a 3D virtual location in the current displayed view of the master 3D digital asset 304a as currently being rendered in the 3D digital asset player 501.

The editor layer 502 comprises one or more mesh layers 502a...502n, with each mesh layer 502a...502n providing X-Y positional locations for user input at a given depth (Z) position in the current view of the virtual scene of the master 3D digital asset 304a being displayed.

Auxiliary asset location markers 503b...503n (hotspot markers) previously set are displayed by editor layer in the display 106a. The virtual 3D positional information for each marker within the master 3D digital asset 304a is obtained from media server 104 and rendered as an X-Y position on the current 2D view of the 3D scene based on a transformation of the virtual 3D positional information for each marker and the current viewpoint position within the master 3D digital asset 304a as currently displayed in the player 501.

Each auxiliary asset location marker 503b...503b can be selected via input device 106b and moved, e.g. via "dragging" with user input device 106 and then "dropping". Alternative means of positional placement of the auxiliary asset location markers 503b...503n are also contemplated, including touch selection and then touch placement within the mesh layer. The placement at a given X-Y position of a given auxiliary asset location markers 503b... 503n within a given mesh layer 502 constitutes the user input which is detected and from which the X-Y positional location is identified, with the given mesh layer 502 providing depth (Z) positional information. Each auxiliary asset location marker 503b...503n corresponds to an auxiliary digital asset 304b...304n, and thus the positional placement of an asset location marker 503b...503n as described above enables positional data within the master 3D digital asset 304a for the corresponding auxiliary digital asset 304b...304n to be generated and stored in the media database 306 or within the master 3D digital asset 304a itself.

Auxiliary asset location markers 503b...503n can be retained in an unused area 504 of the editor layer display 106b where their positional information is not used to identify positional locations within the master 3D digital asset 304a. When selected and moved via user input, a given auxiliary asset location markers 503b...503n can be placed within a given mesh layer for determination of desired positional location within the master 3D digital asset 304a as explained above. Moreover, any "placed" auxiliary asset location marker 503b...503n can be removed from its mesh layer, and thus moved back to the unused area 504 so that it becomes available again for placement. As depicted in Fig. 5, markers 503b to 503e are placed in a first positional mesh, markers 503f and 503..n are placed in a second positional mesh and markers 503h and 503g are unused and located in the unused area 504.

User input via input device 106b can select the current mesh layer for receiving user input and thus set the current depth (Z) position for user input detection and positional determination. For example, the input device 106b can select one or more pre-set depth positions via a content editor accessed via user device 106. The pre-set depth positions can then be associated with the master 3D digital asset which have been pre-set by a user when the master 3D digital asset was initially uploaded to the media server 104. The pre-set depth positions are stored in media database 306 and then displayed to the user for selection via the editor layer 502.

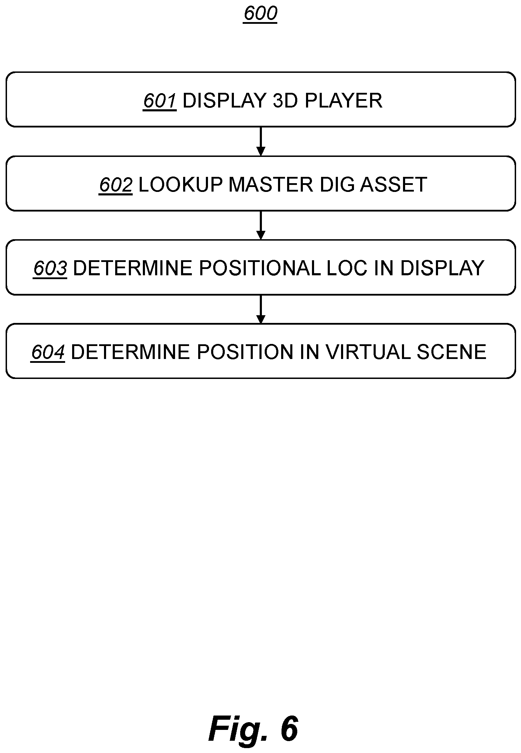

Referring to Fig. 6, the positional processing 600 of digital assets by the media processing device 102 is depicted. The media processing device 102 is configured to detect and identify positional placement information of auxiliary digital assets 304b...304n being located within master 3D digital asset 304a.

In step 601, a 3D digital asset player 501 is displayed within the display 106a.

In step 602, a first positional mesh 502a is overlaid on at least a portion of the 3D digital asset player 501 via an editor layer 502. The first positional mesh assigns a plurality of display X-Y positions within the display 106a with corresponding virtual 3D positional location within the master 3D digital asset 304a, based on the current viewpoint position of the £D player 501 within the master 3D digital asset and the active depth position for the current active mesh.

In step 603, an X-Y position within the display 106a is identified via a user input being provided via the editor layer and user input device 106b. Typically, this would be by dragging and dropping to or providing input at the X-Y position within the display 106a via the user input device 106. The Z position is set by the currently selected mesh layer being the active mesh layer.

In step 604, a virtual 3D positional location within the master 3D digital asset 304a is determined via the first positional mesh 502a from the identified display screen X-Y position, and further from the active mesh layer currently selected (since each mesh layer defines a corresponding depth position).

Additional mesh layers 502b...502n may be displayed in step 601 for receiving user input and determining X-Y positional locations. Each mesh layer 502a...502n corresponds to a set virtual depth position within the master 3D digital asset 304a based on the current virtual view displayed. Each mesh layer 502a...502n can be selected individually via user input device 106b based on pre-set defined depths, so as to be set as the active mesh layer for setting the X-Y positional locations at the given Z depth corresponding to the active mesh layer within the master 3D digital asset 304a.

Step 603 may comprise the positional placement of a location by detecting the drop location on the display 106a of an auxiliary asset location markers 503a...503b as dragged via the input device 106b from one position on the display 106a to another position, e.g. from the available asset area 504 to a given mesh location.

Based on the identified X, Y, Z positional information determined for the placement location and the current viewpoint position in the master 3D digital asset as determined from the 3D player, the media processing device 102 determines the virtual 3D positional location within the master 3D digital asset.

The editor layer 502 implementing mesh layers 502b...502n as overlaid on the playback representation 200 is implemented as a separate executable module to the 3D player. The media processing device 102 receives the X, Y, Z positional information from the editor layer 502 along with the current viewpoint position in the master 3D digital asset 304a from the 3D player 501, and transforms the received X, Y, Z positional information into a virtual 3D positional location within the master 3D asset 304a using the current viewpoint position as a reference point to generate the virtual 3D positional location. The virtual 3D positional location is stored in media server 104, within media database 306, within a digital asset bundle (as described above) or within the master 3D digital asset 304a itself.

The 3D digital asset player 501 can subsequently receive the stored virtual 3D positional location for each auxiliary asset location marker 503b...503b from the media server 104, and render each marker as a hotspot at an X-Y position on the current 2D view of the 3D scene based on a transformation of the virtual 3D positional information for each marker and the current viewpoint position within the master 3D digital asset 304a as currently displayed in the player 501.

The present invention has been described above by way of example only. It will be appreciated that modifications are possible within the scope of the appended claims.

## Claims

1. A computer implemented method (600) for processing digital data including a master 3D digital asset (304a) and an auxiliary digital asset (304b...304n), the method comprising:
providing (601) a 3D digital asset player (501) within a display screen operatively connected to a processing device (102);
providing a first positional mesh (502a) on at least a portion of the 3D digital asset player, wherein the first positional mesh assigns a plurality of display screen positions within the display screen with corresponding virtual 3D positional locations within the master 3D digital asset;
identifying (602, 603) a display screen position via a user input device (106b) operatively connected to the processing device; and
determining (604) via the first positional mesh a virtual 3D positional location within the master 3D digital asset from the identified display screen position.

2. The computer-implemented method of any preceding claim, wherein the step of identifying a display screen position comprises enabling a marker (503b...503n) for the auxiliary digital asset to be dragged via the user input device from a first area (504) of the display screen to a second area comprising the 3D digital asset player onto which the first positional mesh is provided.

3. The computer-implemented method of claim 1 or claim 2, wherein the step of determining comprises:
determining the virtual 3D positional location in the master 3D digital asset based on a mesh location identified from the display screen position of the user input device,
wherein the first positional mesh provides a mapping of a plurality of mesh locations within the display screen to corresponding virtual 3D positional locations of a current view of the master 3D digital asset being displayed in the 3D digital asset player.

4. The computer-implemented method of any preceding claim, wherein the first positional mesh assigns a plurality of display screen positions within the display screen with corresponding virtual 3D positional location a first depth position within the master 3D digital asset.

5. The computer-implemented method of claim 4, further comprising:
providing a second positional mesh (502b) on at least a portion of the 3D digital asset player, wherein the second positional mesh assigns a plurality of display screen positions within the display screen with corresponding virtual 3D positional location a second depth position within the master 3D digital asset which is different to the first depth position.

6. The computer-implemented method of any preceding claim, further comprising:
associating in a database (306) the determined virtual 3D positional location with the auxiliary digital asset.

7. The computer-implemented method of claim 6, further comprising:
delivering, to a user device (106), the master 3D digital asset and the auxiliary digital asset,
playing the master 3D digital asset by a 3D digital asset player (501); and
displaying a hotspot marker (401b...401n) for the auxiliary digital asset within the master 3D digital asset at the determined virtual 3D positional location identified from the database.

8. The computer-implemented method of claim 7, further comprising switching from playing the master 3D digital asset to playing of the auxiliary digital asset upon activation of the hotspot marker.

9. The computer-implemented method of claim 8, wherein the step of switching to playing of the auxiliary digital asset comprises:
detecting activation of the hotspot marker at the virtual 3D positional location;
playing the auxiliary digital asset in the 3D digital asset player in response to the detected activation of the hotspot marker.

10. The computer-implemented method of any preceding claim, wherein the master 3D digital asset comprises a 3D digital scene (400), for example a 3D video stream or 360 degree video content.

11. The computer-implemented method of any preceding claim, wherein the auxiliary digital asset comprises an auxiliary 3D digital scene, for example an auxiliary 3D video stream.

12. A processing device (102) configured to perform the method of any one of the preceding claims.

## Patentansprüche

1. Computerimplementiertes Verfahren (600) zur Verarbeitung von digitalen Daten, die ein digitales 3D-Master-Asset (304a) und ein digitales Zusatz-Asset (304b, ..., 304n) umfassen, wobei das Verfahren umfasst:
Bereitstellen (601) eines digitalen 3D-Asset-Players (501) innerhalb eines Anzeigebildschirms, der mit einer Verarbeitungsvorrichtung (102) funktionell verbunden ist;
Bereitstellen eines ersten Positionsgitters (502a) auf mindestens einem Abschnitt des digitalen 3D-Asset-Players, wobei das erste Positionsgitter eine Mehrzahl von Anzeigebildschirmpositionen innerhalb des Anzeigebildschirms mit entsprechenden virtuellen 3D-Positionsstellen innerhalb des digitalen 3D-Master-Assets zuordnet;
Identifizieren (602, 603) einer Anzeigebildschirmposition mittels einer Benutzereingabevorrichtung (106b), die mit der Verarbeitungsvorrichtung funktionell verbunden ist; und
Bestimmen (604) einer virtuellen 3D-Positionsstelle mittels des ersten Positionsgitters innerhalb des digitalen 3D-Master-Assets aus der identifizierten Anzeigebildschirmposition.

2. Computerimplementiertes Verfahren nach einem der vorhergehenden Ansprüche, wobei der Schritt des Identifizierens einer Anzeigebildschirmposition ein Aktivieren eines Markers (503b, ..., 503n) für das digitale Zusatz-Asset umfasst, der mittels der Benutzereingabevorrichtung aus einem ersten Bereich (504) des Anzeigebildschirms in einen zweiten Bereich gezogen wird, der den digitalen 3D-Asset-Player umfasst, auf dem das erste Positionsgitter bereitgestellt wird.

3. Computerimplementiertes Verfahren nach Anspruch 1 oder 2, wobei der Schritt des Bestimmens umfasst:
Bestimmen der virtuellen 3D-Positionsstelle im digitalen 3D-Master-Asset basierend auf einer aus der Anzeigebildschirmposition der Benutzereingabevorrichtung identifizierten Gitterstelle, wobei das erste Positionsgitter eine Abbildung einer Mehrzahl von Gitterstellen innerhalb des Anzeigebildschirms auf entsprechende virtuelle 3D-Positionsstellen einer aktuellen Ansicht des digitalen 3D-Master-Assets bereitstellt, die im digitalen 3D-Asset-Player angezeigt wird.

4. Computerimplementiertes Verfahren nach einem der vorhergehenden Ansprüche, wobei das erste Positionsgitter einer Mehrzahl von Anzeigebildschirmpositionen innerhalb des Anzeigebildschirms mit entsprechender virtueller 3D-Positionsstelle eine erste Tiefenposition innerhalb des digitalen 3D-Master-Assets zuordnet.

5. Computerimplementiertes Verfahren nach Anspruch 4, ferner umfassend:
Bereitstellen eines zweiten Positionsgitters (502b) auf mindestens einem Abschnitt des digitalen 3D-Asset-Players, wobei das zweite Positionsgitter einer Mehrzahl von Anzeigebildschirmpositionen innerhalb des Anzeigebildschirms mit entsprechender virtueller 3D-Positionsstelle eine zweite Tiefenposition innerhalb des digitalen 3D-Master-Assets zuordnet, die sich von der ersten Tiefenposition unterscheidet.

6. Computerimplementiertes Verfahren nach einem der vorhergehenden Ansprüche, ferner umfassend:
Assoziieren in einer Datenbank (306) der bestimmten virtuellen 3D-Positionsstelle mit dem digitalen Zusatz-Asset.

7. Computerimplementiertes Verfahren nach Anspruch 6, ferner umfassend:
Liefern des digitalen 3D-Master-Assets und des digitalen Zusatz-Assets an eine Benutzervorrichtung (106),
Abspielen des digitalen 3D-Master-Assets durch einen digitalen 3D-Asset-Player (501); und
Anzeigen eines Hotspot-Markers (401b, ..., 401n) für das digitale Zusatz-Asset innerhalb des digitalen 3D-Master-Assets an der bestimmten virtuellen 3D-Positionsstelle, die aus der Datenbank identifiziert wird.

8. Computerimplementiertes Verfahren nach Anspruch 7, ferner umfassend ein Umschalten vom Abspielen des digitalen 3D-Master-Assets zum Abspielen des digitalen Zusatz-Assets bei Aktivierung des Hotspot-Markers.

9. Computerimplementiertes Verfahren nach Anspruch 8, wobei der Schritt des Umschaltens zum Abspielen des digitalen Zusatz-Assets umfasst:
Detektieren der Aktivierung des Hotspot-Markers an der virtuellen 3D-Positionsstelle;
Abspielen des digitalen Zusatz-Assets im digitalen 3D-Asset-Player in Reaktion auf die detektierte Aktivierung des Hotsport-Markers.

10. Computerimplementiertes Verfahren nach einem der vorhergehenden Ansprüche, wobei das digitale 3D-Master-Asset eine digitale 3D-Szene (400), zum Beispiel einen 3D-Videostrom oder 360-Grad-Videoinhalt, umfasst.

11. Computerimplementiertes Verfahren nach einem der vorhergehenden Ansprüche, wobei das digitale Zusatz-Asset eine digitale 3D-Zusatzszene, zum Beispiel einen 3D-Zusatzvideostrom, umfasst.

12. Verarbeitungsvorrichtung (102), die zum Durchführen des Verfahrens nach einem der vorhergehenden Ansprüche konfiguriert ist.

## Revendications

1. Procédé mis en œuvre par ordinateur (600) pour traiter des données numériques comprenant un contenu numérique 3D principal (304a) et un contenu numérique auxiliaire (304b... 304n), le procédé comprenant :
la fourniture (601) d'un lecteur de contenu numérique 3D (501) à l'intérieur d'un écran d'affichage connecté de manière opérationnelle à un dispositif de traitement (102) ;
la fourniture d'un premier maillage positionnel (502a) sur au moins une partie du lecteur de contenu numérique 3D, le premier maillage positionnel attribuant une pluralité de positions d'écran d'affichage à l'intérieur de l'écran d'affichage avec des emplacements positionnels 3D virtuels correspondants à l'intérieur du contenu numérique 3D principal ;
l'identification (602, 603) d'une position de l'écran d'affichage par l'intermédiaire d'un dispositif d'entrée utilisateur (106b) connecté de manière opérationnelle au dispositif de traitement ; et
la détermination (604), par l'intermédiaire du premier maillage positionnel, d'un emplacement positionnel 3D virtuel à l'intérieur du contenu numérique 3D principal à partir de la position identifiée de l'écran d'affichage.

2. Procédé mis en œuvre par ordinateur selon n'importe quelle revendication précédente, l'étape d'identification d'une position d'écran d'affichage comprenant l'activation d'un marqueur (503b... 503n) pour le contenu numérique auxiliaire à faire glisser par l'intermédiaire du dispositif d'entrée utilisateur d'une première zone (504) de l'écran d'affichage à une seconde zone comprenant le lecteur de contenu numérique 3D sur lequel le premier maillage positionnel est fourni.

3. Procédé mis en œuvre par ordinateur selon la revendication 1 ou selon la revendication 2, l'étape de détermination comprenant :
la détermination de l'emplacement positionnel 3D virtuel dans le contenu numérique 3D principal sur la base d'un emplacement de maille identifié à partir de la position de l'écran d'affichage du dispositif d'entrée utilisateur, le premier maillage positionnel fournissant une mise en correspondance d'une pluralité d'emplacements de maille à l'intérieur de l'écran d'affichage à des emplacements positionnels 3D virtuels correspondants d'une vue actuelle du contenu numérique 3D principal affichée dans le lecteur de contenu numérique 3D.

4. Procédé mis en œuvre par ordinateur selon n'importe quelle revendication précédente, le premier maillage positionnel attribuant une pluralité de positions de l'écran d'affichage à l'intérieur de l'écran d'affichage avec l'emplacement positionnel 3D virtuel correspondant, une première position de profondeur à l'intérieur du contenu numérique 3D principal.

5. Procédé mis en œuvre par ordinateur selon la revendication 4, comprenant en outre :
la fourniture d'un second maillage positionnel (502b) sur au moins une partie du lecteur de contenu numérique 3D, le second maillage positionnel attribuant une pluralité de positions d'écran d'affichage à l'intérieur de l'écran d'affichage avec l'emplacement positionnel 3D virtuel correspondant, une seconde position de profondeur à l'intérieur du contenu numérique 3D principal qui est différente de la première position de profondeur.

6. Procédé mis en œuvre par ordinateur selon n'importe quelle revendication précédente, comprenant en outre :
l'association dans une base de données (306) de l'emplacement positionnel 3D virtuel déterminé au contenu numérique auxiliaire.

7. Procédé mis en œuvre par ordinateur selon la revendication 6, comprenant en outre :
la livraison, à un dispositif utilisateur (106), du contenu numérique 3D principal et du contenu numérique auxiliaire,
la lecture du contenu numérique 3D principal par un lecteur de contenu numérique 3D (501) ; et
l'affichage d'un marqueur de hotspot (401b... 401n) pour le contenu numérique auxiliaire à l'intérieur du contenu numérique 3D principal à l'emplacement positionnel 3D virtuel déterminé identifié à partir de la base de données.

8. Procédé mis en œuvre par ordinateur selon la revendication 7, comprenant en outre la commutation de la lecture du contenu numérique 3D principal à la lecture du contenu numérique auxiliaire lors de l'activation du marqueur de hotspot.

9. Procédé mis en œuvre par ordinateur selon la revendication 8, l'étape de commutation à la lecture du contenu numérique auxiliaire comprenant :
la détection de l'activation du marqueur de hotspot à l'emplacement positionnel 3D virtuel ;
la lecture du contenu numérique auxiliaire dans le lecteur de contenu numérique 3D en réponse à l'activation détectée du marqueur de hotspot.

10. Procédé mis en œuvre par ordinateur selon n'importe quelle revendication précédente, le contenu numérique 3D principal comprenant une scène numérique 3D (400), par exemple un flux vidéo 3D ou un contenu vidéo à 360 degrés.

11. Procédé mis en œuvre par ordinateur selon n'importe quelle revendication précédente, le contenu numérique auxiliaire comprenant une scène numérique 3D auxiliaire, par exemple un flux vidéo 3D auxiliaire.

12. Dispositif de traitement (102) configuré pour réaliser le procédé selon l'une quelconque des revendications précédentes.
